# EUROPEAN PATENT APPLICATION

(11) **EP 4 787 212 A1**
(43) Date of publication of application: **05.08.2026**
(21) Application number: 25305160.1
(22) Date of filing: 04.02.2025
(51) Int. Cl.: G06F 21/79, G06F 12/14

(54) **DEVICE AND METHOD FOR PROTECTING INFORMATION LEAKAGE FROM THE BUS**

(71) Applicant: BULL SAS, 78340 Les Clayes-Sous-Bois (FR)
(72) Inventor: DWARAKANATH, Nagarjun, 94400 VITRY-SUR-SEINE (FR); DRUYER, Rémy, 78340 LES-CLAYES-SOUS-BOIS (FR); GOURAUD, Thierry, 78450 VILLEPREUX (FR); LEBRET, Kevin, 78700 CONFLANS-SAINTE-HONORINE (FR)
(74) Representative: IPAZ

(57) **Abstract**

The invention concerns a processing unit comprising on a chip:
- a microprocessor for reading and/or writing in an external memory via a bus, the external memory being arranged outside the chip,
- an address protection unit comprising:
- a swap unit implementing an address permutation scheme for protecting information leakage from the bus,
- a permutation table maintaining a mapping between real address called by the microprocessor and masked address used by the swap unit to address the external memory,
- shuffle buffer containing M slots among N slots of the memory address space, M<N, and
- a counter table containing one counter per slot of said N slots, the counter of a slot is incremented only when an element of said slot is written in the shuffle buffer, memory addresses are considered in bunches;
- a flag unit containing a flag per bunch;
- an update unit configured to trigger an update algorithm when the flag has changed to a predetermined value.

## Description

### Domain of the invention

The present invention relates to a method and device for protecting memory addresses passed around on a bus arranged between a processor on a chip and a memory which is external to the chip.

### Background of the invention

In a computing system, the processor accesses the memory by sending addresses on the memory bus. These addresses can leak secret information, this may be secret key material, or structural knowledge about the program.

Roughly, there are two kinds of address information which can be useful to an attacker. If addresses are sent unprotected, then the attacker can identify program constructs like loops and branches by just looking at the adjacency of addresses. To protect against this, we can randomly permute the addresses, in which case a sequence of consecutive addresses, after permutation will look like random addresses to the attacker.

However, this is not sufficient. While random permutations can hide adjacency, they can not hide the frequencies at which different addresses are accessed. To protect against this, there are mechanisms proposed in the literature, which periodically re-permute the memory. After a random permutation, previously collected frequency information will no longer be useful to the attacker.

Permuting the whole memory is a very expensive operation and can add a large amount of latency. To remedy this, the scheme in the following document, which we will refer to as shuffle scheme, adds a small buffer called the shuffle buffer on the chip itself.

The document Xiaotong Zhuang, Tao Zhang, Hsien-Hsin S Lee, and Santosh Pande, "Hardware assisted control flow obfuscation for embedded processors.", in Proceedings of the 2004 international conference on Compilers, architecture, and synthesis for embedded systems, pages 292-302, 2004. In this document, whenever an element is read from memory, a random element from the shuffle buffer is swapped with it. This can be seen as effecting a transposition or a swap of two elements. This means that the effective permutation changes every time the memory is accessed, even if the change is only over two elements, and this makes the attacker's task much harder. We call this mechanism address protection.

The solution proposed by Zhuang et al., does not offer protection against all of the basic attacks such as for example replay attacks.

The document Gao, Lan, et al. "A low-cost memory remapping scheme for address bus protection.", Proceedings of the 15th international conference on Parallel architectures and compilation techniques, 2006, also discloses an address protection mechanism. In a computing system, the processor accesses the memory by sending addresses on the memory bus.

However, the Gao solution is resource intensive and does not offer protection against all of the basic attacks such as for example replay attacks.

An object of the present invention is to provide a method that preserves resources in a address protection algorithm without reducing the level of protection.

### Disclosure of the invention

This and other objects of the present invention are substantially achieved by providing a processing unit comprising on a chip:
- a microprocessor for reading and/or writing in an external memory via a bus, the external memory being arranged outside the chip,
- an address protection unit comprising:
   - a swap unit implementing an address permutation scheme for protecting information leakage from the bus,
   - a permutation table maintaining a mapping between real address called by the microprocessor and masked address used by the swap unit to address the external memory,
   - shuffle buffer containing M slots among N slots of the memory address space, M<N,
   - a counter table containing one counter per slot of said N slots, the counter of a slot is incremented only when an element of said slot is written in the shuffle buffer,
   wherein, in response to a call, from the microprocessor, of a first element contained in the memory, the swap unit is configured to emit a read call at masked address A to the external memory and get a ciphertext of the first element and a tag of the first element; verifying, decrypting and writing the first element in the shuffle buffer at a randomly picked address A' where a second element was stored; encrypting said second element using the counter of said second element so as to generate a ciphertext and a tag for said second element, and writing the ciphertext and a tag for said second element in the external memory at address A; noting down in the permutation table; incrementing only the counter of the first element once the tag of said first element has been verified.

With the present invention, a counter table is used inside the chip. This counter table contain a counter for each address of the external memory. The present invention uses counter to encrypt the data entering and getting out the chip.

The present invention offers confidentiality, authentication and integrity for data passing between external memory and processor by means of encryption, authentication tags over the data and counters. The address access patterns are masked by constantly permuting the data counter information, which reduces the information that can be learned by an attacker. Thus, an attacker cannot now learn a lot about the algorithm/data used by observing the memory addresses passed around on the bus.

By using the relatively large on-chip memory, all the counter values are stored on the chip. This helps in massively reducing delay since we no longer have to authenticate the counters, but only the MAC tags. When counters are stored in memory unencrypted, the attacker can observe a data block simply by following the evolution of the counter.

The counter is incremented every time a shuffle buffer slot is accessed.

For example, every element is encrypted with an encryption key depending on a global encryption key, its counter and its address. Using the counter to encrypt helps in re-encrypting a block every time it enters and exits the chip, which is advantageous to hide reads and writes from the attacker. Using the element address helps in avoiding attacks where the attacker can swap ciphertexts of two different addresses but same counter values. Similarly, the authentication tag should depend on both the ciphertext and the counter.

One way this can be done is to generate the encryption and authentication keys at boot time, and then store the data always in encrypted form in the memory. The tags are recomputed every time the element is accessed and kept packed in the memory.

The method according to the present invention proposes an optimization which will decrease the size that counters occupy. Of all the elements on the chip (counters, shuffle buffer, permutation table), it is indeed the counters which take the most space.

To reduce the size occupied by the counters, the invention provides that:
- all memory addresses can be considered in bunches, each bunch having 2^{k} addresses with k<l, l being the logical address bitwidth, and
- each counter can be split in a high counter (CH) and in a low counter (CL); the high counter being determined to be unique for every bunch, and the low counter being determined to point to all addresses inside every bunch.

In this case, the size of the low counter is therefore k, and the size of the high counter can be l-k. In other words, all addresses with the same l-k significant bits belong to the same bunch, the addresses differ in the k least significant bits in said same bunch. The low counter is unique for every address and is stored individually on the chip.

With the present invention, in operation, only the low counter is incremented; the high counter being concatenated to get the full counter.

However, the solution of the present invention is based on allocation of addresses in bunches and on segmented counters that make it possible to get the benefit of for example 64 bit counters, without actually using the 64 bit counters. This aspect is completely absent in both Zhuang et al. and Gao et al.

The present invention offers a compact solution to encrypt external memory and hide address access patterns.

The idea behind the optimization is that addresses which are used with the same frequency will have identical significant bits in their counters. This optimization forces this to be the case for all counters in the same bunch. During normal use, only the low counter is incremented, the high counter is concatenated to get the full counter.

According to an advantageous embodiment of the invention, the processing unit can further comprise a flag unit containing a flag per bunch; the flag consisting in two bits which change value when a low counter reaches a critical value in a bunch.

An update unit can be provided and configured to trigger an update algorithm when the flag has changed value from 00 to 01 or 10 for a given bunch.

The update algorithm can comprise the steps of:
- initiating reads on every address in the given bunch,
- once all the addresses in the bunch have been treated, the Flag is set to 00 and the high counter is incremented simultaneously.

The critical value can be 0111...1 or 1111...1.

During the read, if the Flag is set to 01 or 10 respectively, the low counters are modified to 100...0 or 000...0 respectively, instead of being incremented. With the invention, when the flags are turned on, the counters instead of being incremented are set to specific values depending on the flag.

The use of flag requires some extra space on the chip, but the total size of two bits per bunch is lower than the total space saved by segmenting counter.

At some point, exactly one address will enter the chip and have a critical value (either "all ones", which we can write as 11, or 0 followed by ones, which we can write as 01). Adding one to it will produce a carry. If we just increase the high counter at this point, it will work for the address a that was retrieved, but may not work for other addresses in the bunch which are still in memory, since their tags were calculated with respect to the older value of high counter.

To fix this, when the first address with critical low counter value enters the chip, we make a call to the Update algorithm, handled by the update unit. When the corresponding instance of the Update exits, all the tags will be in concordance with their counters. This requires an additional element of 2 bits, called Flag, which is unique to the bunch. In normal circumstances, it in unset, and during Update, it is set to either 01 or 10.

According to an advantageous embodiment of the invention, the swap unit can be configured to implement:
- an EncryptandGenerateTag function taking in a plaintext m, real address a and counter CTR and generates a ciphertext c and authentication tag Tag, the secret keys used being implicit,
- a VerifyTagandDecrypt function taking in the ciphertext c, authentication tag Tag, real address a and counter CTR and generates a plaintext m.

According to the invention, the swap unit can be configured to indicate a potential attack if the authentication tag can not be verified at any point; the indication of potential attack consisting in raising an appropriate alarm and shutting the swap unit down, rendering any further attack impossible and requiring a reboot.

According to another aspect of the invention, it is proposed a method for protecting address information during an address sequence on a bus arranged between a microprocessor on a chip and an external memory which is external to the chip, the method comprising:
- displacing in a shuffle buffer M slots among N slots of the memory address space, M<N, the shuffle buffer being arranged inside the chip,
- creating inside the chip a counter table containing one counter per slot of said N slots,
- when a first element of a real address a is called by the microprocessor for read or write, the method further comprising:
   - translating the real address a into a masked address A, using a permutation table stored inside the chip,
   - if the first element is in the shuffle buffer (A < M), performing directly the read or write inside the chip,
   - if the said element is in the memory, emitting a read call at address A to the external memory and get a ciphertext of the first element and a tag,
   - verifying, decrypting and writing the first element in the shuffle buffer at a randomly picked address A' where a second element was stored,
   - encrypting said second element using the counter of said second element so as to generate a ciphertext and a tag for said second element, and writing the ciphertext and a tag for said second element in the external memory at address A,
   - noting down in the permutation table,
   - incrementing only the counter of the first element once the tag of said first element has been verified. Thus, only the counter of the incoming element is incremented, once it has been verified.

Note that all elements in memory are always both encrypted and authenticated using the respective global keys, their addresses and counters, to avoid the attacks mentioned.

The swap changes the address mapping at exactly two places.

The present invention takes advantage of the shuffle scheme algorithm or address protection mechanism as disclosed by Zhuang et al. But the present invention improves the protection by encrypting and decrypting element based on counters stored inside the chip.

As already specified, the swap unit is configured to implement the following method:
- all memory addresses are considered in bunches, each bunch having 2^{k} addresses with k<l, l being the logical address bitwidth, and
- each counter is split in a high counter (CH) and in a low counter (CL); the high counter being determined to be unique for every bunch, and the low counter being determined to point to all addresses inside every bunch,
- in operation, incrementing only the low counter; the high counter being concatenated to get the full counter.

The method invention can comprise the steps of:
- activating a two bits flag when a low counter reaches a critical value in a bunch, and
- triggering an update algorithm when the flag has changed value from 00 to 01 or 10 for a given bunch.

The update algorithm can comprise the steps of:
- initiating reads on every address in the given bunch,
- once all the addresses in the bunch have been treated, the Flag is set to 00 and the high counter is incremented simultaneously.

In the method of the invention, the encryption step can comprise using an EncryptandGenerateTag function taking in a plaintext m, real address a and counter CTR and generates a ciphertext c and authentication tag Tag, the secret keys used being implicit.

The verification and decryption steps can comprise using a VerifyTagandDecrypt function taking in the ciphertext c, authentication tag Tag, real address a and counter CTR and generates a plaintext m.

The method invention can comprise the steps of indicating a potential attack if the authentication tag can not be verified at any point; the indication of potential attack consisting in raising an appropriate alarm and shutting the swap unit down, rendering any further attack impossible and requiring a reboot.

### Brief Description of the Drawings

Further advantages and characteristics of the invention will become apparent on examining the detailed description of an embodiment, which is in no way limitative, and the attached drawings, in which:
Figure 1 is a schematic view of a block diagram of components of a first embodiment according to the invention;
Figure 2 is a schematic view illustrating steps of the first embodiment according to the invention;
Figure 3 is a code illustrating a swap algorithm according to the first embodiment of the invention;
Figure 4 is a table illustrating possibles sizes of components of the system according to the first embodiment of the invention,
Figure 5 is a schematic view of a block diagram of components of a second embodiment including the first embodiment according to the invention;
Figure 6 is a code illustrating an update algorithm according to the invention;
Figure 7 is a code illustrating a modified swap algorithm according to the second embodiment of the invention;
Figures 8-10 are tables illustrating a sample walkthrough of the update algorithm according to the invention, and
Figure 11 is a table illustrating possibles sizes of components of the system according to the second embodiment of the invention.

### Detailed Description

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

Hereinafter, the present invention will be described in detail by explaining exemplary embodiments of the invention with reference to the attached drawings.

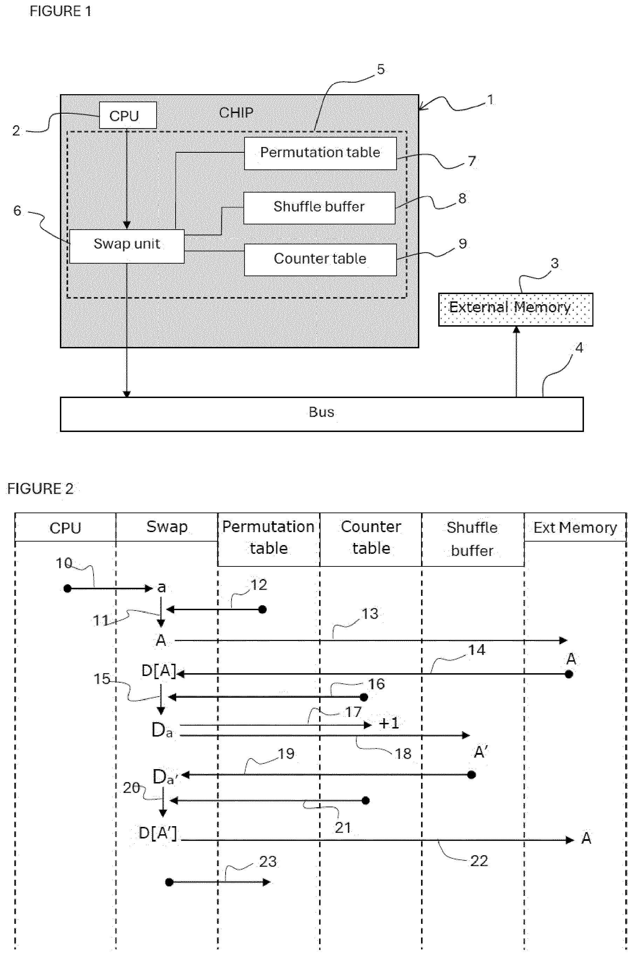

Figure 1 depicts a chip 1 containing a microprocessor 2 which is intended to exchange data or elements with an external memory 3. The external memory 3 is outside the chip 1. The communication between the chip 1 and the external memory 3 is carried out via a bus 4.

The external memory 3 can take command in the form Mem.Read(A) for reads and returns the element D[A] and the associated tag tag[A] in memory. It also can take command in the form Mem.Write(A, (D, tag)) for writes, which writes the values D and tag to address A in memory.

The aim of the present invention is to avoid leak of sensitive information via the bus 4.

The chip 1 comprises the address protection unit 5 which includes a swap unit 6 implementing an address permutation scheme for protecting information leakage from the bus. The swap unit 6 intercepts read/write requests from the processor and services them. It may have to initiate a swap between the shuffle buffer and memory, do some management of the counters and takes care of the tag verification/generation.

The address protection unit 5 also includes a permutation table 7 maintaining a mapping between real address called by the microprocessor 2 and masked address used by the swap unit 6 to address the external memory 3. The permutation function can be noted σ. By using a simple table based implementation, the permutation table can be stored in N log(N) bits.

The address protection unit 5 also includes a shuffle buffer 8 containing M slots among N slots of the external memory 3 address space, M<N. The shuffle buffer can for example occupy the first M slots of the memory address space. The addresses 0 to M-1 belong to the on-chip shuffle buffer 8, and the addresses M to N-1 to the external memory 3. This can be provided by some initialization code before offering address protection, the first M cache lines can be moved from the external memory 3 to the shuffle buffer 8, and from then onwards the first M slots of the memory are no longer used for any memory accesses, until the address protection mechanism is stopped. This will require M*d bits to store, d being the size of cache block in bits.

The address protection unit 5 also includes a counter table 9 containing one counter per slot of said N slots, the counter of a slot is incremented only when an element of said slot is written in the shuffle buffer 8.

The counters for the elements under address protection are kept on-chip. Counters can be 64 bits long, so 64N bits are needed to store the counter table 9. Counters get incremented every time an element enters the chip, and can happen at most once per clock cycle. Even at a high frequency of 1 GHz, it will take at least over 500 years in the worst case, before a counter repeats. This a sufficiently large margin for an address protection mechanism.

Without being a limitation of the invention, following terminology can be used. The variants of a represent real addresses (addresses which are used by the processor and is only seen inside the chip) and the variants of A represent masked addresses (which are the addresses actually found on the bus and seen by the attacker).

We let d be the size of the cache block in bits and the logical address bitwidth is l bits (so N = 2^{l}).

We assume the address protection unit implements two functions EncryptandGenerateTag and VerifyTagandDecrypt. The function EncryptandGenerateTag takes in the plaintext m, real address a and counter CTR and generates an ciphertext c and authentication tag *tag* (the secret keys used are implicit). The function VerifyTagandDecrypt takes in the ciphertext c, authentication tag *tag,* real address a and counter CTR and generates a plaintext m. If the authentication tag can not be verified at any point, it indicates a potential attack. We assume that the address protection unit raises an appropriate alarm and shuts itself down, rendering any further attack impossible and requiring a reboot of the system.

We use the symbols *Dₐ; tagₐ;CTRₐ* for the data, MAC tag and counter associated to the real address a. We note that *tagₐ* is always stored in memory and *CTRₐ* on-chip. We also use D[A]; *tag*[A] to refer to the data and MAC tag associated to the masked address A (array notation is useful since the data elements may indeed be stored in such a manner on memory). Then, for A < M, D[A] is on the shuffle buffer and for A>= M, D[A] is in memory.

The swap unit 6 takes the active role of providing address protection. The microprocessor 2 emits read and write calls. These are intercepted by the Swap unit 6 which has access to the permutation table 7, counter table 9 and the shuffle buffer 8. The swap unit 6 implements an unified algorithm (also called Swap for simplicity) for which an illustration is depicted on figure 2. When the processor 2 emits a Read(a) call, the swap unit 6 treats it as a call to Swap(address = a; value = None; isread = True) and when the processor 2 emits a Write(a, Value) call, the swap unit treats it as a call to Swap(address = a; value = Value; isread = False). In this way, the swap unit 6 handles the read and write calls uniformly.

Figure 2 illustrates some steps of a first embodiment carried out by the swap unit 6 according to the invention.

The swap algorithm begins by translating in step 11 the real address a *,* call by the processor 2 in step 10, into a masked address A, using the permutation table 7 at step 12. If this element is in the shuffle buffer (A < M), then it can perform the read/write directly. If it is instead in the memory, it will emit a read call, step 13, at address A to the external memory 3 and get, step 14, a ciphertext D[A] and tag. This is verified and decrypted at step 15 using counter, step 16. At step 18, the plaintext *Dₐ* is written in the shuffle buffer 8 at a randomly picked address A'. It will also pick the element *D_{a'}* at address A' at step 19 and generate at step 20 a ciphertext D[A'] and tag for it, using a counter at step 21, and write it in the memory at address A, step 22. Finally, this swap changes the address mapping at exactly two places, and is noted down in the permutation table at step 23. Only the counter of the incoming element is incremented, once its tag has been verified at step 17.

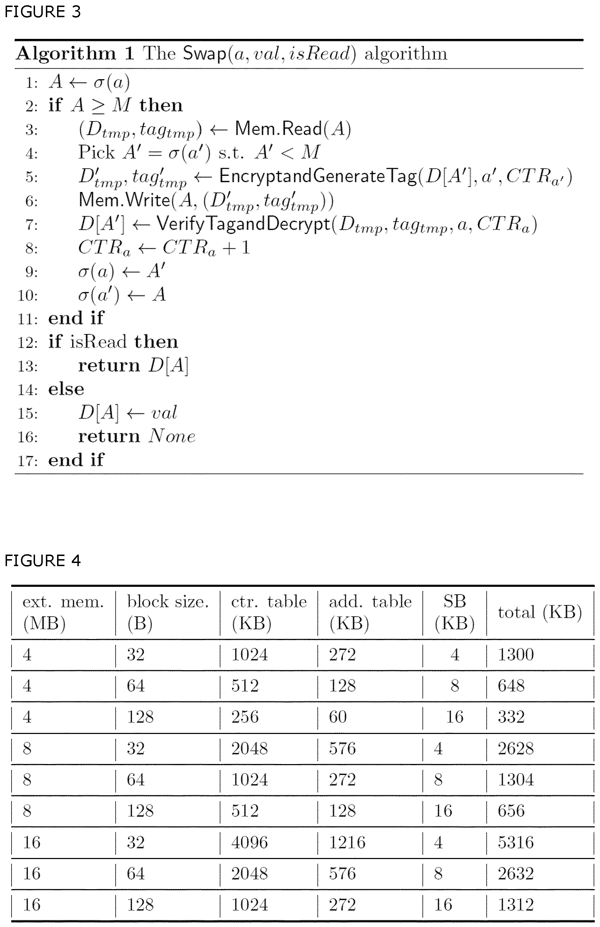

Figures 3 also illustrates the swap algorithm as Algorithm 1.

Table 1 on figure 4 contains a small sampling of the possible parameters in where we vary the size of the external memory and the block size (the shuffle buffer is kept at a constant 128 elements). We can observe that a relatively large external memory can be protected by a address protection unit which is a small fraction of its size, especially when the block size can be made large.

A second embodiment according to the invention will now be described in order to decrease the size of the address protection unit even further, by introducing an optimization to the counter table which is the largest element in the address protection unit.

Of all the elements on the chip (counters, shuffle buffer, permutation table), it is the counters which take the most space. The second embodiment is an optimization of the first embodiment which will decrease the size that counters occupy. This will require some extra space on the chip for flags and some modifications to the Swap algorithm which add some complexity to the algorithm.

The following terminology can be used. We introduce two notions of bunches and split counters. We suppose the logical address bitwidth is l bits (so there are 2^{l} logical addresses) and there are 2^{k} addresses in each bunch. In particular, every logical address which shares the most significant l - k bits belong to the same bunch. For a real address a, all the addresses belonging to the bunch containing a is denoted as Bunch(a).

In the first embodiment, every address had a counter of its own. In the optimized variant, the second embodiment, the counter is split into a high counter (written CH) and a low counter (written CL). Every address still has its own low counter, but the high counter is shared between all addresses in a bunch, and need only be stored once on the chip. The counter for an address is obtained by concatenating its high and low counter. To every bunch, we also store two bits called Flag, which can only take values 00; 01 and 10. We let c be the number of bits in a CL, then 64 - c is the number of bits in a CH (since the counters are 64 bits in length).

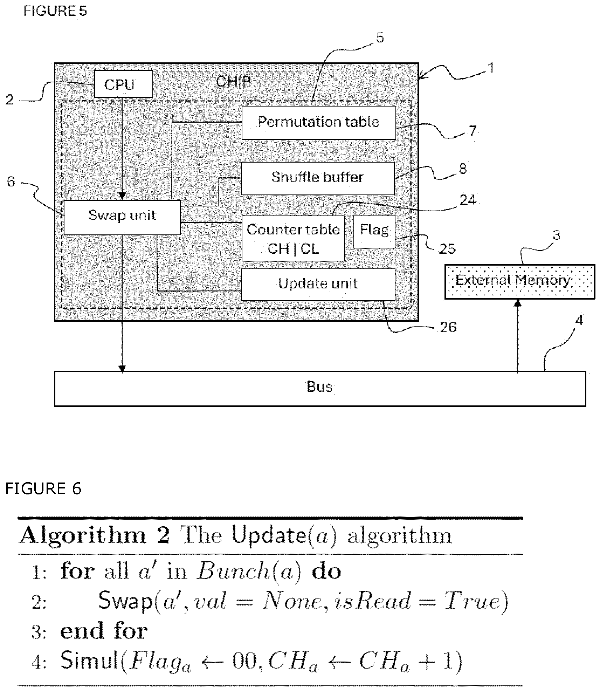

On figure 5, the same components as illustrated on figure 1 have the same references. The second embodiment comprises a counter table 24 where each counter is split into a high counter CH and a low counter CL. A flag unit 25 is connected to the counter table 24.

We introduce some notation for specific CL values. We write 01; 11; 00; 10̅ for the values 0111...; 1111...; 0000...; 1000... respectively. So for 5 bit CLs, 01; 11; 00; 10̅ correspond to the values 01111; 11111; 00000; 10000.

In the first embodiment, the counters are all initialized to zero and get incremented when they enter the chip. In the optimized variant, the CLs are initialized to 00̅ (or 10), and get incremented. Exactly one of the counters in a bunch will first hit a critical value 01̅ ( 11 resp.), in which case the Flag variable is raised to 01 (10 resp.) and the Update algorithm is initiated. The Update algorithm in turn initiates reads on every address in the bunch. During the read, because the Flag is set to 01 (10 respectively), the CLs are modified to a predetermined value 10̅ ( 00̅ resp.) instead of being incremented. Once all the addresses in the bunch have been treated, the Flag is set to 00 and the CH is incremented simultaneously. Both actions happen simultaneously, this is noted in the algorithm 2 of figure 6 as Simul.

Simply increasing the CH when a CL hits a critical value will invalidate the tags already written to the memory. Instead, according to the invention, the Flag is set to 01 or 10, and all CLs are modified. During this, some elements may be swapped out of the shuffle buffer inadvertently. The MSB of the CL tells us if the address has been treated or not. Only after all addresses have been modified, can the CH be safely raised.

Figure 6 illustrates the Algorithm 2 implemented by an Update unit 26, see figure 5. Both the Update unit 26 and the processor 2 send requests to the Swap unit 6, and we suppose that the Swap unit 6 contains a round-robin scheduler which alternates priority between the two when there is a conflict.

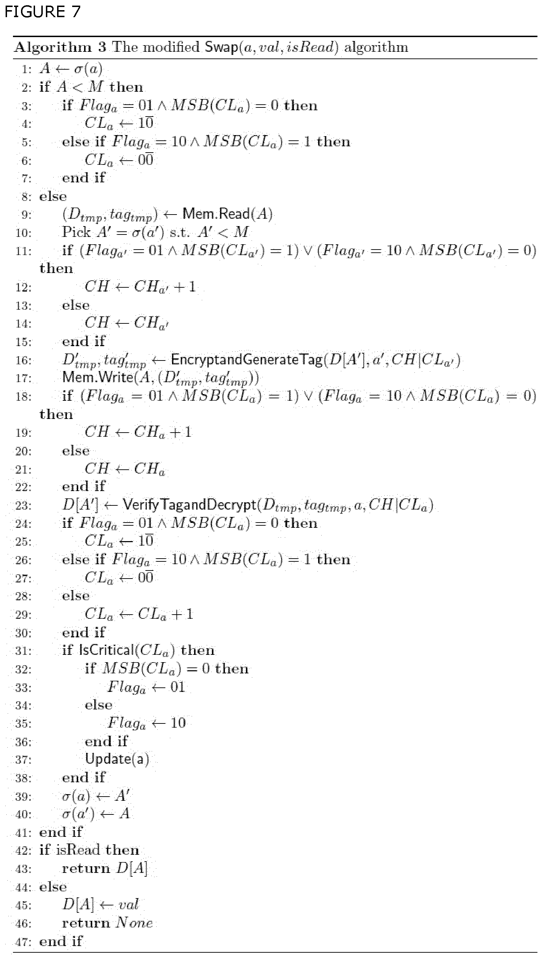

We preserve all other components from the first embodiment. The Swap unit 6 implements the modified Swap algorithm, Algorithm 3 on figure 7, which takes bunches and split counters into consideration.

The line by line explanation of the modified Swap algorithm of figure 7 is as follows:
- 1: the real address a is converted into masked address A.
- 2-7: if the masked address is less than M (in other words, the element is in the shuffle buffer), we look if we need to modify the counter. If the Flag is 01 and MSB of the CL is 0, it means the counter hasn't been bumped up, and it is bumped up to 10. Note that by modifying up to this value, the condition is not satisfied anymore since the MSB has changed to 1.
- Lines 5 and 6 are similar to lines 3 and 4.
- 9-10: This means that the element is in memory, so we read the element at A, and pick a random element at A' to swap out.
- 11-17: Now the element at A has to be written out, so it has to be encrypted and authenticated. What is the value of the counter? In particular, if the Flag is raised and the element has already been read in by Update, it means CH*ₐ* hasn't been incremented yet but needs to be treated like it is, so we use the value CH*ₐ* +1. If this is not true, then the value of CH*ₐ* is used to encrypt and generate authentication tags and is written out at address A.
- 18-23: A similar analysis is done for the incoming element. Once the CH is selected, it is verified and decrypted.
- 24-30: Note that the incoming element has its counter incremented.

However if the Flag is turned on (value of 01; 10) it has to be modified instead. If this is not true, it can be incremented.
- 31-38: Now that the incoming counter is incremented, we need to check if the CL is critical. If it is critical, the Flag has to be set depending on the MSB of the CL and the Update algorithm needs to be initiated.
- 39-40: The permutation is modified.
- 42-47: Either the read or write is executed.

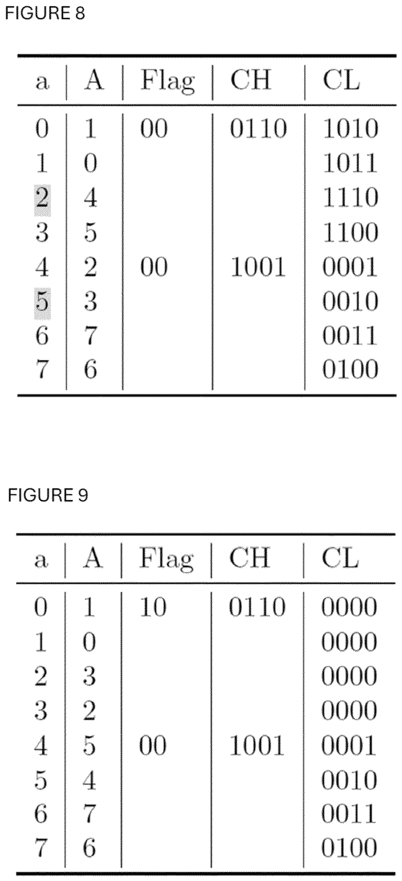

Figures 8 to 10 depict tables showing a sample walkthrough of the Update algorithm, with N = 8 and M = 4, using 4 bit CLs and CHs and 4 elements in a bunch.

On table of figure 8: during a Swap operation, we read in (a = 2;A = 4) (A >= M, so in memory) and swap out a = 5;A = 3. This changes the permutation, but after CL*ₐ* is incremented, it is noticed that the value is critical and the MSB of the CL is 1, so the Flag is raised to 10.

On table of figure 9: the Update unit reads in all addresses in Bunch(2), which are a = 0; 1; 2; 3. a = 0; 1; 2 are already in the shuffle buffer, so their CLs are modified to 0000. a = 3 is in memory, so it is swapped with (a = 4;A = 2), and since the MSB of its CL is 1, it has to be modified to 0000 as well.

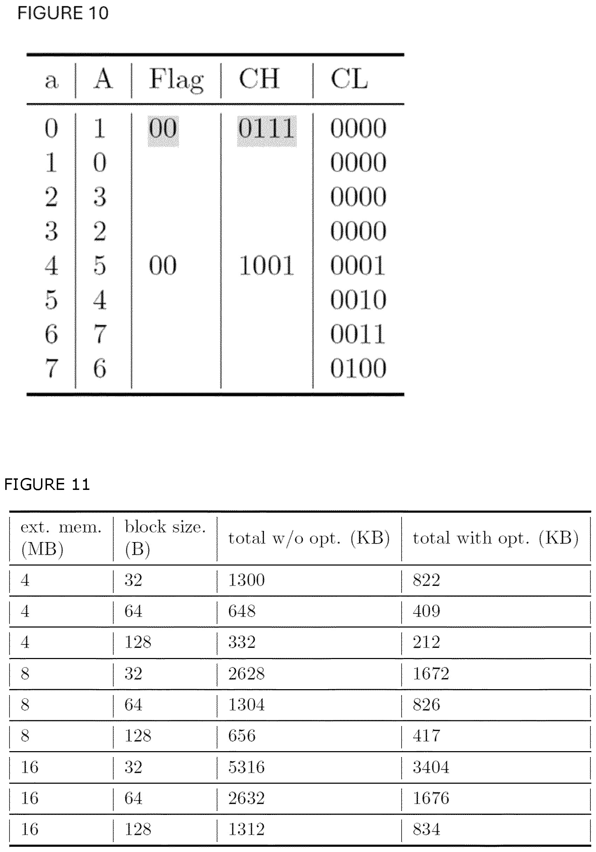

On table of figure 10: now that all elements in the bunch have had their CLs modified, the Flag is set to 00 and CH is incremented at the same time.

In the first embodiment, the counter table occupies 64N bits. In the optimized variant, it occupies cN + (64 - c)N/2^{k} bits (the CLs take c bits, and the CHs take 64 - c bits but there is only N/2^{k} of them) and an extra 2 * N/2^{k} for the Flag bits. All other components use the same amount of space as the first embodiment.

In the table of figure 11, we reproduce the parameters used in the previous table of figure 4, but using 32 bit CHs and CLs (so c = 32) and 16 addresses to a bunch (k = 4), for illustration purposes. We can notice that we can have large savings for counters, especially when the block size is large.

In general, the size of CL, which is c bits determines how aggressive the optimization is. The case c = 64 corresponds to the first embodiment, so there's no savings. On the other side, a very small c will have large savings but will initiate the Update algorithm more frequently. Taking an intermediate value like c = 32 gives a good balance between these concerns.

The present invention offers confidentiality, authentication and integrity for data passing between external memory and processor by means of encryption, authentication tags over the data and counters. We mask address access patterns by constantly permuting the data, which reduces the information that can be learned by an attacker.

Numerous variations and modifications will become apparent to those skilled in the art once the above disclosure is fully appreciated.

## Claims

1. A processing unit comprising on a chip:
- a microprocessor for reading and/or writing in an external memory via a bus, the external memory being arranged outside the chip,
- an address protection unit comprising:
- a swap unit implementing an address permutation scheme for protecting information leakage from the bus,
- a permutation table maintaining a mapping between real address called by the microprocessor and masked address used by the swap unit to address the external memory,
- shuffle buffer containing M slots among N slots of the memory address space, M<N,
- a counter table containing one counter per slot of said N slots, the counter of a slot is incremented only when an element of said slot is written in the shuffle buffer,
wherein, in response to a call, from the microprocessor, of a first element contained in the memory, the swap unit is configured to emit a read call at masked address A to the external memory and get a ciphertext of the first element and a tag of the first element; verifying, decrypting and writing the first element in the shuffle buffer at a randomly picked address A' where a second element was stored; encrypting said second element using the counter of said second element so as to generate a ciphertext and a tag for said second element, and writing the ciphertext and a tag for said second element in the external memory at address A; noting down in the permutation table; incrementing only the counter of the first element once the tag of said first element has been verified.

2. The processing unit according to claim 1, wherein:
- all memory addresses are considered in bunches, each bunch having 2^{k} addresses with k<l, l being the logical address bitwidth, and
- each counter is split in a high counter (CH) and in a low counter (CL); the high counter being determined to be unique for every bunch, and the low counter being determined to point to all addresses inside every bunch.

3. The processing unit according to claim 2, wherein further comprising a flag unit containing a flag per bunch; the flag consisting in two bits which change value when a low counter reaches a critical value in a bunch.

4. The processing unit according to claim 3, wherein further comprising an update unit configured to trigger an update algorithm when the flag has changed value from 00 to 01 or 10 for a given bunch.

5. The processing unit according to claim 4, wherein the update algorithm comprises the steps of:
- initiating reads on every address in the given bunch,
- once all the addresses in the bunch have been treated, the Flag is set to 00 and the high counter is incremented simultaneously.

6. The processing unit according to any of claims 3 to 5, wherein the critical value is 0111...1 or 1111...1.

7. The processing unit according to any of preceding claims, wherein the swap unit is configured to implement:
- an EncryptandGenerateTag function taking in a plaintext m, real address a and counter CTR and generates a ciphertext c and authentication tag Tag, the secret keys used being implicit,
- a VerifyTagandDecrypt function taking in the ciphertext c, authentication tag Tag, real address a and counter CTR and generates a plaintext m.

8. The processing unit according to any of preceding claims, wherein the swap unit is configured to indicate a potential attack if the authentication tag can not be verified at any point; the indication of potential attack consisting in raising an appropriate alarm and shutting the swap unit down, rendering any further attack impossible and requiring a reboot.

9. Method for protecting address information during an address sequence on a bus arranged between a microprocessor on a chip and an external memory which is external to the chip, the method comprising:
- displacing in a shuffle buffer M slots among N slots of the memory address space, M<N, the shuffle buffer being arranged inside the chip,
- creating inside the chip a counter table containing one counter per slot of said N slots,
- when a first element of a real address a is called by the microprocessor for read or write, the method further comprising:
- translating the real address a into a masked address A, using a permutation table stored inside the chip,
- if the first element is in the shuffle buffer (A < M), performing directly the read or write inside the chip,
- if the said element is in the memory, emitting a read call at address A to the external memory and get a ciphertext of the first element and a tag,
- verifying, decrypting and writing the first element in the shuffle buffer at a randomly picked address A' where a second element was stored,
- encrypting said second element using the counter of said second element so as to generate a ciphertext and a tag for said second element, and writing the ciphertext and a tag for said second element in the external memory at address A,
- noting down in the permutation table,
- incrementing only the counter of the first element once the tag of said first element has been verified.

10. The method according to claim 9, wherein:
- all memory addresses are considered in bunches, each bunch having 2^{k} addresses with k<l, l being the logical address bitwidth, and
- each counter is split in a high counter (CH) and in a low counter (CL); the high counter being determined to be unique for every bunch, and the low counter being determined to point to all addresses inside every bunch,
- in operation, incrementing only the low counter; the high counter being concatenated to get the full counter.

11. The method according to claim 10, wherein comprising the step of activating a two bits flag when a low counter reaches a critical value in a bunch.

12. The method according to claim 11, wherein comprising the step of triggering an update algorithm when the flag has changed value from 00 to 01 or 10 for a given bunch.

13. The method according to claim 12, wherein the update algorithm comprises the steps of:
- initiating reads on every address in the given bunch,
- once all the addresses in the bunch have been treated, the Flag is set to 00 and the high counter is incremented simultaneously.

14. The method according to according to any of claims 9 to 13, wherein:
- the encryption step comprises using an EncryptandGenerateTag function taking in a plaintext m, real address a and counter CTR and generates a ciphertext c and authentication tag Tag, the secret keys used being implicit,
- the verification and decryption steps comprise using a VerifyTagandDecrypt function taking in the ciphertext c, authentication tag Tag, real address a and counter CTR and generates a plaintext m.

15. The method according to any of preceding claims, wherein comprising the steps of: indicating a potential attack if the authentication tag can not be verified at any point; the indication of potential attack consisting in raising an appropriate alarm and shutting the swap unit down, rendering any further attack impossible and requiring a reboot.
